# EUROPEAN PATENT APPLICATION

(11) **EP 4 510 735 A1**
(43) Date of publication of application: **19.02.2025**
(21) Application number: 23787754.3
(22) Date of filing: 12.04.2023
(51) Int. Cl.: H04W 72/04, H04B 7/155

(54) **RESOURCE MULTIPLEXING METHOD OF REPEATER, REPEATER, AND NETWORK-SIDE DEVICE**

(30) Priority: 12.04.2022 CN 202210384090
(71) Applicant: Vivo Mobile Communication Co., Ltd., Dongguan, Guangdong 523863 (CN)
(72) Inventor: PENG, Shuyan, Dongguan, Guangdong 523863 (CN); WANG, Huan, Dongguan, Guangdong 523863 (CN); LIU, Jinhua, Dongguan, Guangdong 523863 (CN)
(74) Representative: Cabinet Beaumont
(86) International application number: PCT/CN2023/087850
(87) International publication number: WO 2023/198111

(57) **Abstract**

This application pertains to the field of communication technologies, and discloses a resource multiplexing method for a repeater, a repeater, and a network-side device. The repeater includes a radio unit RU and a mobile termination MT. The resource multiplexing method for a repeater in embodiments of this application includes: determining, by the repeater, a resource or a state of the RU based on first information, where the first information includes information for determining a resource type and/or a transmission direction.

## Description

### CROSS-REFERENCE TO RELATED APPLICATIONS

This application claims priority to Chinese Patent Application No. 202210384090.3, filed on April 12, 2022 and entitled "RESOURCE MULTIPLEXING METHOD FOR REPEATER, REPEATER, AND NETWORK-SIDE DEVICE", which is incorporated herein by reference in its entirety.

### TECHNICAL FIELD

This application pertains to the field of communication technologies, and specifically, relates to a resource multiplexing method for a repeater, a repeater, and a network-side device.

### BACKGROUND

A classic signal amplifier (repeater) amplifies and forwards uplink and downlink signals on a full carrier based on uplink and downlink frame structure configurations, regardless of whether the carrier carries a signal that needs to be forwarded. When a signal needs to be carried and forwarded, the amplifier may operate in an on (ON) state or amplification mode to increase a signal coverage area. When no signal needs to be carried or forwarded, the amplifier may be made to be in an off (OFF) state or a silent state to reduce power of the amplifier. In addition, amplification of noise can be reduced to reduce interference caused by the amplifier to a system.

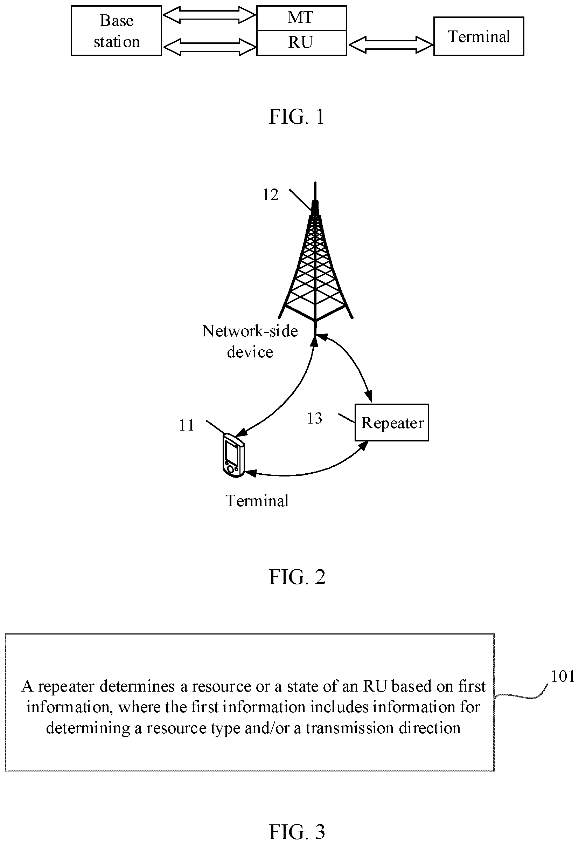

An intelligent repeater may receive control from an upstream base station (parent node) or a donor base station (donor node). To be specific, the base station may control transmission parameters of the intelligent repeater, for example, on/off and a transmit beam of the intelligent repeater, to improve operation efficiency of the repeater and reduce interference. A network architecture shown in FIG. 1 includes three network nodes. An intermediate network node is a repeater, and includes a mobile termination (mobile termination, MT) module and a radio unit (radio unit or radio frequency unit, RU). The MT may establish a connection to an upstream base station, and the base station may indicate transmitting/receiving-related parameters of the MT/RU of the repeater by exchanging control signaling with the repeater through the MT. The amplifier may not be able to simultaneously process transmission by the MT and the RU due to a baseband or radio frequency limitation of the amplifier. However, in view of spectral efficiency of a system, simultaneous transmission by the MT and the RU is expected. Therefore, for a person skilled in the art, how to implement multiplexing of an MT and an RU is a technical problem that urgently needs to be resolved.

### SUMMARY

Embodiments of this application provide a resource multiplexing method for a repeater, a repeater, and a network-side device, to resolve a problem of how to implement multiplexing of an MT and an RU.

According to a first aspect, a resource multiplexing method for a repeater is provided. The repeater includes a radio unit RU and a mobile termination MT, and the method includes:
determining, by the repeater, a resource or a state of the RU based on first information, where the first information includes information for determining a resource type and/or a transmission direction.

According to a second aspect, a resource multiplexing method for a repeater is provided. The repeater includes a radio unit RU and a mobile termination MT, and the method includes:
transmitting, by a network-side device, first information to the repeater, where the first information includes information for determining a resource type and/or a transmission direction, and the first information is used by the repeater to determine a resource or a state of the RU.

According to a third aspect, a resource multiplexing apparatus for a repeater is provided, and is applied to a repeater. The repeater includes a radio unit RU and a mobile termination MT, and the apparatus includes:
a processing module, configured to determine a resource or a state of the RU based on first information, where the first information includes information for determining a resource type and/or a transmission direction.

According to a fourth aspect, a resource multiplexing apparatus for a repeater is provided, and is applied to a repeater. The repeater includes a radio unit RU and a mobile termination MT, and the apparatus includes:
a transmitting module, configured to transmit first information to the repeater, where the first information includes information for determining a resource type and/or a transmission direction, and the first information is used by the repeater to determine a resource or a state of the RU.

According to a fifth aspect, a repeater is provided. The repeater includes a processor and a memory. The memory stores a program or instructions capable of running on the processor. When the program or instructions are executed by the processor, the steps of the method according to the first aspect are implemented.

According to a fifth aspect, a repeater is provided, including a processor and a communication interface. The processor is configured to determine a resource or a state of an RU based on first information, where the first information includes information for determining a resource type and/or a transmission direction.

According to a sixth aspect, a network-side device is provided. The network-side device includes a processor and a memory. The memory stores a program or instructions capable of running on the processor. When the program or instructions are executed by the processor, the steps of the method according to the second aspect are implemented.

According to a seventh aspect, a network-side device is provided, including a processor and a communication interface. The communication interface is configured to transmit first information to a repeater, where the first information includes information for determining a resource type and/or a transmission direction, and the first information is used by the repeater to determine a resource or a state of an RU.

According to an eighth aspect, a communication system is provided, including a repeater and a network-side device. The repeater may be configured to perform the steps of the resource multiplexing method for a repeater according to the first aspect. The network-side device may be configured to perform the steps of the resource multiplexing method for a repeater according to the second aspect.

According to a ninth aspect, a readable storage medium is provided. The readable storage medium stores a program or instructions. When the program or instructions are executed by a processor, the steps of the method according to the first aspect are implemented, or the steps of the method according to the second aspect are implemented.

According to a tenth aspect, a chip is provided. The chip includes a processor and a communication interface. The communication interface is coupled to the processor. The processor is configured to run a program or instructions, to implement the method according to the first aspect, or implement the method according to the second aspect.

According to an eleventh aspect, a computer program or program product is provided. The computer program or program product is stored in a storage medium. The computer program or program product is executed by at least one processor to implement the steps of the resource multiplexing method for a repeater according to the first aspect or the second aspect.

In the embodiments of this application, a repeater includes an RU and an MT, and a resource or a state of the RU is determined based on first information, where the first information includes information for determining a resource type and/or a transmission direction. In the foregoing solution, the resource or the state of the RU may be determined based on a resource type and/or a transmission direction that are determined based on the first information, to implement different multiplexing methods for the RU and the MT, and achieve a balance between resource utilization and a delay.

### BRIEF DESCRIPTION OF DRAWINGS

FIG. 1 is a schematic diagram of a network architecture to which embodiments of this application are applicable;
FIG. 2 is a structural diagram of a wireless communication system to which embodiments of this application are applicable;
FIG. 3 is a first schematic flowchart of a resource multiplexing method for a repeater according to an embodiment of this application;
FIG. 4 is a first schematic diagram of a multiplexing principle of a resource multiplexing method for a repeater according to an embodiment of this application;
FIG. 5 is a second schematic diagram of a multiplexing principle of a resource multiplexing method for a repeater according to an embodiment of this application;
FIG. 6 is a second schematic flowchart of a resource multiplexing method for a repeater according to an embodiment of this application;
FIG. 7 is a first schematic structural diagram of a resource multiplexing apparatus for a repeater according to an embodiment of this application;
FIG. 8 is a second schematic structural diagram of a resource multiplexing apparatus for a repeater according to an embodiment of this application;
FIG. 9 is a schematic structural diagram of a communication device according to an embodiment of this application; and
FIG. 10 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE)/LTE-advanced (LTE-Advanced, LTE-A) system, and may be further used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the technology described herein may be used in the aforementioned systems and radio technologies as well as other systems and radio technologies. In the following descriptions, a new radio (New Radio, NR) system is described for an illustration purpose, and NR terms are used in most of the following descriptions, but these technologies may also be applied to applications other than an NR system application, for example, a 6^{th} generation (6^{th} Generation, 6G) communication system.

FIG. 2 is a block diagram of a wireless communication system to which embodiments of this application are applicable. The wireless communication system includes a terminal 11, a repeater 13, and a network-side device 12. The terminal 11 may be a terminal-side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), smart household (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart headset, smart glasses, smart jewelry (a smart bangle, a smart bracelet, a smart ring, a smart necklace, a smart ankle bangle, a smart anklet, or the like), a smart wristband, smart clothing, or the like. It should be noted that a specific type of the terminal 11 is not limited in the embodiments of this application. The network-side device 12 may include an access network device or a core network device. The access network device 12 may also be referred to as a radio access network device, a radio access network (Radio Access Network, RAN), a radio access network function, or a radio access network unit. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the art. Provided that the same technical effects are achieved, the base station is not limited to a specific technical term. It should be noted that the base station in the NR system is used only as an example for description in the embodiments of this application, but a specific type of the base station is not limited.

First, a scenario in the embodiments of this application is described:
A signal amplifier or a repeater may be configured to expand a coverage area of a cell or supplement a blind area of coverage by a base station, including: receiving and amplifying a downlink signal from an upstream donor base station, so that strength of a signal arriving at a terminal is increased; and amplifying an uplink signal from a terminal, so that strength of an uplink signal from the terminal to an upstream base station is increased.

As shown in FIG. 1, an intermediate network node is a repeater (also referred to as a repeater). The repeater includes a mobile termination MT module and a radio unit RU. Alternatively, the repeater includes only one of the MT and the RU. The MT may establish a connection to an upstream base station, and the base station may indicate transmitting/receiving-related parameters of the MT/RU of the repeater by exchanging control signaling with the repeater through the MT.

In addition, the repeater may alternatively be a reconfigurable intelligence surface (Reconfigurable Intelligence Surface, RIS) or a front-end remote radio unit (Remote Radio Unit, RRU) of a base station.

In the embodiments of this application, an intelligent repeater may also be referred to as a network-controlled repeater.

The MT part may also be considered as a control unit.

A duplexing (Duplexing) mode between the RU and the MT includes a half duplex (Half duplex) mode and a full duplex (Full duplex) mode. In the case of full duplex, the RU and the MT can simultaneously perform transmitting/receiving.

When the RU and the MT are in a time domain multiplexing (Time Domain Multiplexing, TDM) mode, a transmitting/receiving operation of the RU and a transmitting/receiving operation of the MT may be performed in half duplex mode.

When the RU and the MT are in a frequency domain multiplexing (Frequency Domain Multiplexing, FDM) or spatial domain multiplexing (Spatial Domain Multiplexing, SDM) mode, a transmitting/receiving operation mode for the RU and the MT may include at least one of the following duplexing modes:
1. RU-TX & MT-TX: The RU is configured to DL, and the MT is configured as UL; or the RU performs actual DL transmitting, and the MT performs actual UL transmitting;
2. RU-RX & MT-RX: The RU is configured to UL, and the MT is configured to DL; or the RU performs actual UL receiving, and the MT performs actual DL receiving.
3. RU-TX & MT-RX: The RU is configured to DL, and the MT is configured to DL; or the RU performs actual DL transmitting, and the MT performs actual DL receiving.
4. RU-RX & MT-TX: The RU is configured to UL, and the MT is configured to UL; or the RU performs actual UL receiving, and the MT performs actual UL transmitting.

Time division multiplexing TDM means that the MT and the RU of the repeater operate on different time domain resources. For example, the MT receives a physical downlink shared channel (Physical Downlink Shared Channel, PDSCH)/physical downlink control channel (Physical Downlink Control Channel, PDCCH) from a network-side device or transmits a physical uplink shared channel (Physical Uplink Shared Channel, PUSCH) to a network-side device on a time domain resource, and the RU receives a PUSCH from a terminal or transmits a PDSCH/PDCCH to a terminal on another time domain resource.

Spatial domain multiplexing SDM means that the MT and the RU of the repeater operate on a same time-frequency resource. The MT receives a PDSCH/PDCCH from a network-side device or the MT transmits a PUSCH to a network-side device, and the RU receives a PUSCH from a terminal or the RU transmits a PDSCH/PDCCH to a terminal on a same time-frequency-domain resource.

Frequency division multiplexing FDM means that the MT and the RU of the repeater simultaneously operate on different frequency resources. The MT receives a PDSCH/PDCCH from a network-side device or the MT transmits a PUSCH to a network-side device, and the RU receives a PUSCH from a terminal or the RU transmits a PDSCH/PDCCH to a terminal on a same time domain resource.

The foregoing third and fourth modes may be referred to as a full duplex mode. The full duplex mode may specifically mean that a repeater simultaneously receives a PDSCH/PDCCH from a network-side device and transmits a PDSCH/PDCCH to a terminal, or a repeater simultaneously transmits a PUSCH to a network-side device and receives a PUSCH from a terminal on a same time-frequency resource.

An OFF state mentioned in the embodiments of this application is a state in which the RU part does not amplify or transmit an input signal, and may be one of the following states: an RU sleep state, a low output power state, a low amplification state, or a power-off state. An ON state of the RU may be an amplification-and-forwarding or forwarding operating state or a non-forwarding operating state. If the RU is in the non-forwarding operating state, the RU may transmit/receive data, but does not forward the data to a next-hop/previous-hop device.

Due to baseband and radio frequency limitations, the repeater may not be able to simultaneously process transmission by the MT and the RU, or the MT and the RU interfere with each other during simultaneous transmission. If the MT and the RU support only multiplexing in the TDM mode, baseband processing and radio frequency limitations of the repeater can be met, but system resource utilization is low or spectral efficiency of a system is low, and a data packet delay is large. If the MT and the RU support multiplexing in the FDM mode, system resource utilization can be improved, and a data packet delay can be reduced, but a range of a capability of the repeater needs to be met. Therefore, a solution for achieving a balance between a processing capability of a repeater and system performance is required to optimize system performance. In addition, because data forwarded by a repeater cannot be stored and demodulated before being forwarded, a current multiplexing method is not applicable to a repeater. Therefore, a new solution proposed in the embodiments of this application may be used for resource multiplexing for a repeater.

The following describes in detail a resource multiplexing method for a repeater in the embodiments of this application with reference to the accompanying drawings and by using some embodiments and application scenarios thereof.

FIG. 3 is a schematic flowchart of an embodiment of a resource multiplexing method for a repeater according to an embodiment of this application. The repeater in this embodiment includes a radio unit RU and a mobile termination MT. As shown in FIG. 3, the method provided in this embodiment includes the following steps.

Step 101: The repeater determines a resource or a state of the RU based on first information, where the first information includes information for determining a resource type and/or a transmission direction.

Specifically, the first information may be determined based on higher-layer configuration information, or may be determined based on physical layer indication information. The first information may be used to configure or indicate a resource type and/or a transmission direction. The resource type includes, for example, a soft (soft)-type resource, a hard (hard)-type resource, or an unavailable (not available, NA)-type resource. The transmission direction may be a transmission direction on a time unit. For example, the time unit may be a symbol, a slot, a subframe, a millisecond, a frame, or a second. The transmission direction includes a transmission direction of the MT and/or a transmission direction of the RU.

Further, a resource or a state of the RU may be determined based on the first information.

The resource of the RU may be a resource actually used by the RU or a resource available to the RU. The resource may include a time domain resource, a frequency domain resource, a power resource, or the like. Similarly, the state of the RU may be an actual state of the RU or a state available to the RU. For example, the state available to the RU is as follows: A state of the RU on a specific resource is uplink forwarding or amplification-and-forwarding, but the RU may actually not perform forwarding on the resource.

The state of the RU may be an RU ON (ON) state or an RU OFF (OFF) state, or may be an RU UL ON state, an RU UL OFF state, an RU DL ON state, or an RU DL OFF state.

In the method in this embodiment, a repeater includes an RU and an MT, and a resource or a state of the RU is determined based on first information, where the first information includes information for determining a resource type and/or a transmission direction. In the foregoing solution, the resource or the state of the RU may be determined based on a resource type and/or a transmission direction that are determined based on the first information, to implement different multiplexing methods for the RU and the MT, and achieve a balance between resource utilization and delay.

Optionally, the first information includes at least one of the following: resource availability information or time division duplex TDD information, the resource availability information is used to determine a resource type, and the TDD information is used to determine a transmission direction of the MT or the RU on a time unit.

Specifically, the resource availability information or the TDD information is configured on a resource. For example, resource availability information of a resource configures or indicates that a resource type of the resource is a soft (soft)-type resource, a hard (hard)-type resource, or an unavailable (not available, NA)-type resource. To be specific, it may be determined, based on resource availability information of a resource, that a resource type of the resource is a soft-type resource, a hard-type resource or an unavailable-type resource. Alternatively, a transmission direction configured or indicated by TDD information of a resource is UL, DL, or flexible. To be specific, it may be determined, based on TDD information of a resource, that a transmission direction is UL, DL, or flexible.

Optionally, the first information and/or third information are carried in at least one of the following:
F1 application protocol F1-AP signaling, a backhaul access protocol packet data unit (Backhaul Access Protocol Packet Data Unit, BAP-PDU), radio resource control (Radio Resource Control, RRC), a medium access control control element (Medium Access Control Control Element, MAC CE), or downlink control information (Downlink Control Information, DCI).

The F1-AP signaling may also be referred to as F1 control (F1 control, F1-C) signaling.

Optionally, the first information includes the resource availability information, and step 101 may be specifically implemented in the following manner:
The repeater determines the resource or the state of the RU based on a resource type determined based on the resource availability information, where the resource type includes at least one of the following: a hard-type resource, a soft-type resource, or an unavailable-type resource.

Specifically, the resource or the state of the RU may be determined based on a resource type configured or indicated by the resource availability information.

The resource availability information may be availability information for a time domain, frequency domain, or spatial domain resource.

### Manner a (the resource type is a hard-type resource):

In a case that a resource type determined based on resource availability information of a first resource is a hard-type resource, the first resource is a resource available to the RU, or the RU is in an on state or a non-forwarding state on the first resource; or
in a case that a resource type determined based on resource availability information of a first resource is a hard-type resource, the repeater determines the state of the RU based on the TDD information.

Specifically, the non-forwarding state may mean that data is received from a network-side device or transmitted to a network-side device without being transmitted to a terminal.

Optionally, the TDD information may be TDD information of the MT, and the repeater may determine the state of the RU based on the TDD information in the following manner:
If a transmission direction of the MT on the first resource is uplink, the state of the RU on the first resource is uplink forwarding or amplification-and-forwarding;
if a transmission direction of the MT on the first resource is downlink, the state of the RU on the first resource is downlink forwarding or amplification-and-forwarding; or
if a transmission direction of the MT on the first resource is flexible, the state of the RU on the first resource is uplink forwarding or amplification-and-forwarding, or the state of the RU on the first resource is downlink forwarding or amplification-and-forwarding.

### Manner b (the resource type is a soft-type resource):

In a case that a resource type determined based on resource availability information of a first resource is a soft-type resource, the first resource is a resource unavailable to the RU, or the RU is in an off state on the first resource; or
in a case that a resource type determined based on resource availability information of a first resource is a soft-type resource, the state of the RU does not affect transmitting and/or receiving by the MT; or
in a case that a resource type determined based on resource availability information of a first resource is a soft-type resource, the repeater determines the resource or the state of the RU based on the TDD information; or
in a case that a resource type determined based on resource availability information of a first resource is a soft-type resource, the repeater determines the resource or the state of the RU based on downlink control information DCI.

Specifically, that the state of the RU does not affect transmitting and/or receiving by the MT may mean that a state of the RU in DL and/or UL does not affect transmitting and/or receiving by the MT. To be specific, if transmitting and/or receiving by the RU do not affect transmitting and/or receiving by the MT, the RU may perform transmitting and/or receiving on the first resource; otherwise, the RU does not perform transmitting and/or receiving on the first resource. The transmitting by the RU may include amplification-and-forwarding or forwarding.

If the first information is configuration information, the first information may be implemented by F 1-AP, RRC, a MAC CE, or the like. If the first information is indication information, indication may be performed by DCI. To be specific, the resource or the state of the RU may be determined based on the DCI. For example, the first resource is a soft-type resource, and the DCI indicates that the first resource is a resource available to the RU, or the DCI indicates that the RU is in an on state, an off state, or the like on the first resource.

In a case that the resource type determined based on the resource availability information of the first resource is a soft-type resource, if the DCI indicates that the first resource is a resource available to the RU, the first resource is a resource available to the RU, or the RU is in an on state; or
if the DCI indicates that the first resource is a resource unavailable to the RU, the first resource is a resource unavailable to the RU, or the amplifier determines that the RU is in an off state.

Optionally, the repeater may determine the resource or the state of the RU based on the TDD information in the following manner:
If a transmission direction of the MT on the first resource is downlink, the state of the RU on the first resource is downlink forwarding or amplification-and-forwarding; or
if a transmission direction of the MT on the first resource is downlink, the RU is in an off state on the first resource; or
if a transmission direction of the MT on the first resource is uplink, the RU is in an off state on the first resource; or
if a transmission direction of the MT on the first resource is uplink, the state of the RU on the first resource is uplink forwarding or amplification-and-forwarding.

For example, in a case that a transmission direction of the MT is downlink and the RU and the MT support FDM, the state of the RU on the first resource is downlink forwarding or amplification-and-forwarding; or
in a case that a transmission direction of the MT is downlink and the RU and the MT support TDM, the RU is in an off state on the first resource; or
in a case that a transmission direction of the MT is uplink and the RU and the MT support TDM, the RU is in an off state on the first resource; or
in a case that a transmission direction of the MT is uplink and that RU uplink and MT uplink support TDM, the RU is in an off state on the first resource; or
in a case that a transmission direction of the MT is uplink and the RU and the MT support FDM, the state of the RU on the first resource is uplink forwarding or amplification-and-forwarding.

Optionally, in a case that the resource type determined based on the resource availability information of the first resource is an unavailable-type resource, the first resource is a resource unavailable to the RU, or the RU is in an off state.

In the foregoing implementation, in a case that the resource type determined based on the resource availability information of the first resource is a soft-type resource, a hard-type resource, or an unavailable-type resource, different multiplexing methods for the RU and the MT are implemented, and different multiplexing methods may be selected according to actual requirements, with high flexibility, so that requirements of different scenarios can be met.

Optionally, the first information includes the TDD information, and step 101 may be specifically implemented in the following manner:
The repeater determines the resource or the state of the RU based on a transmission direction determined based on TDD information of a first resource.

For example, if a transmission direction configured or indicated by the TDD information is opposite to a direction in which the RU is to transmit data, it is considered that multiplexing is impossible; otherwise, multiplexing is possible.

Optionally, if a transmission direction on the first resource is uplink, the RU is in an uplink on state on the first resource, the RU is in a downlink off state on the first resource, and the RU is in a flexible on or off state on the first resource; or
if a transmission direction on the first resource is downlink, the RU is in an uplink off state on the first resource, the RU is in a downlink on state on the first resource, and the RU is in a flexible on or off state on the first resource; or
if a transmission direction on the first resource is flexible, the RU is in uplink, downlink, and flexible on states on the first resource; or
if a transmission direction on the first resource is flexible, the RU is in uplink, downlink, and flexible off states on the first resource; or
if a transmission direction on the first resource is flexible, the repeater determines uplink, downlink, and flexible states of the RU on the first resource based on second information, where the second information is used to determine a state of the RU; or
if a transmission direction on the first resource is flexible, the RU is in an off state on the first resource.

Optionally, the second information is information that performs separate UL, DL, and flexible (flexible) indications.

For example, the second information includes three indication fields, and the three indication fields are respectively used to indicate uplink, downlink, and flexible states of the RU. To be specific, an indication field indicates that RU UL is in an ON or OFF state, an indication field indicates that RU DL is in an ON or OFF state, and an indication field indicates that RU flexible is in an ON or OFF state.

Optionally, the second information is information that performs joint indication.

For example, the second information includes one indication field, and the indication field is used to indicate uplink, downlink, and flexible states of the RU.

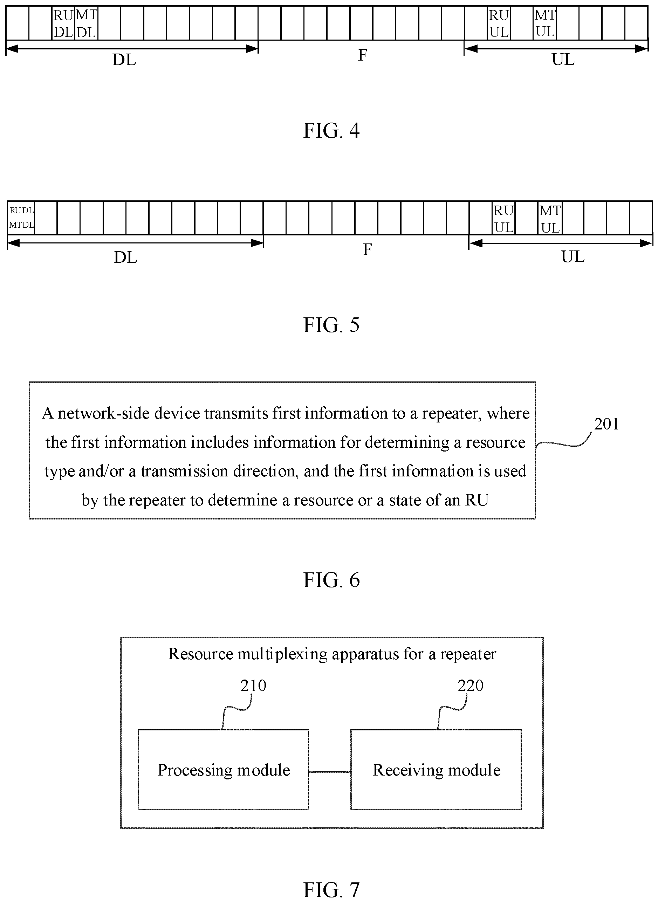

For example, as shown in FIG. 4, the network-side device configures TDM multiplexing for the MT and the RU.

As shown in FIG. 5, the network-side device configures FDM multiplexing for MT DL and RU DL and TDM multiplexing for MT UL and RU UL.

In the foregoing implementation, the RU flexible being in the ON state is intended to match possible UL transmission, to improve system resource utilization; and the RU flexible being in the OFF state is intended to minimize power consumption for uncertain transmission.

In the foregoing implementation, if the transmission direction on the first resource is flexible, in a case that the RU is in uplink, downlink, and flexible on states on the first resource, resource utilization can be improved; and if the transmission direction on the first resource is flexible, in a case that the RU is in uplink, downlink, and flexible off states on the first resource, an amount of power consumed by the repeater can be reduced, in other words, power consumption can be reduced.

In the foregoing implementation, if the transmission direction on the first resource is flexible, in a case that the RU is in an off state on the first resource, transmission by the MT is not affected at all, and transmitting/receiving of control information on the MT side is ensured.

Optionally, the method further includes:
The repeater receives third information transmitted by a network-side device, where the third information is used to indicate time information of the state of the RU, and the third information includes at least one of the following:
duration, a periodicity, an offset of a starting position, an offset of an ending position, a reference time point, and a subcarrier spacing (Subcarrier Space, SCS).

The reference time point may be a system frame number (System Frame Number, SFN) 0.

The third information includes the subcarrier spacing. For example, scaling (scaling) of a slot (slot) is performed based on an indicated SCS and a reference SCS.

In an embodiment, in a case that a resource for the RU of the repeater conflicts with a resource for the MT of the repeater on a second resource, transmission by the RU and/or the MT of the repeater is determined based on at least one of the following:
the second resource is a transmission resource for the MT, or the RU is in an off state on the second resource; or
the second resource is a transmission resource for the RU, or the RU is in an on state on the second resource; or
determining the transmission by the RU and/or the MT based on an information type of the MT and/or the RU.

Specifically, when scheduling/configuration of the RU on the second resource conflicts with scheduling/configuration of the MT, the MT may be given priority by default, to be specific, the second resource is a transmission resource for the MT, or the RU is in an off state on the second resource; or the RU is given priority by default, to be specific, the second resource is a transmission resource for the RU, or the RU is in an on state on the second resource; or the transmission by the RU and/or the MT may be determined based on an information type, namely, a type of transmission data, of the MT and/or the RU.

In the foregoing implementation, in a case that a resource for the RU of the repeater conflicts with a resource for the MT of the repeater on the second resource, because transmission information of the MT is control information of the RU, the MT may be given priority, to be specific, the second resource is a transmission resource for the MT, or the RU is in an off state on the second resource.

In the foregoing implementation, in a case that a resource for the RU of the repeater conflicts with a resource for the MT of the repeater, different multiplexing methods for the RU and the MT can be implemented, and different multiplexing methods may be selected according to actual requirements, with high flexibility, so that requirements of different scenarios can be met.

Optionally, the determining the transmission by the RU and/or the MT based on an information type of the MT and/or the RU includes:
if an information type of the MT is a first signal, the second resource is a transmission resource for the MT; or
if an information type of the RU is a first signal, the second resource is a transmission resource for the RU; or
if an information type of the MT is first configuration information, the second resource is a transmission resource for the MT, where the first configuration information includes at least one of the following: physical uplink control channel (Physical Uplink Control Channel, PUCCH) configuration information, physical random access channel (Physical Random-Access Channel, PRACH) configuration information, RRC configuration information, or RRC reconfiguration information; or
if an information type of the MT is connection establishment information, the second resource is a transmission resource for the MT; or
if an information type of the MT is information for parameter adjustment, the second resource is a transmission resource for the RU, where
the first signal includes at least one of the following: a sounding reference signal (Sounding Reference Signal, SRS), a physical random access channel PRACH, a channel state information reference signal (Channel state information Reference Signal, CSI-RS), a type 0 common search space (Common Search Space, CSS), a synchronization signal block (Synchronization Signal Block, SSB), a PUCCH, or RRC information.

Specifically, the information type may be a signal type. Optionally, the signal type is, for example, a cell-specific signal (cell-specific signal), for example, the foregoing first signal. If transmission data of the MT is the first signal, the MT is given priority, to be specific, the second resource is a transmission resource for the MT. Alternatively, if transmission data of the RU is the first signal, the RU is given priority, to be specific, the second resource is a transmission resource for the RU. Alternatively, if transmission data of the MT is configuration information such as PUCCH configuration information, PRACH configuration information, or RRC configuration information, the MT is given priority, to be specific, the second resource is a transmission resource for the MT. Alternatively, if transmission data of the MT is connection establishment information, because the repeater establishes a connection through the MT, the MT is given priority, to be specific, the second resource is a transmission resource for the MT. Alternatively, if transmission data of the MT is information for parameter adjustment, the RU may be given priority.

In the foregoing implementation, different multiplexing methods for the RU and the MT are implemented based on a type of transmission data, with high flexibility, so that requirements of different scenarios can be met.

Optionally, a guard bandwidth between a transmission resource for the MT and a transmission resource for the RU is predefined, configured, or indicated.

A guard bandwidth between the MT and the RU may be predefined in a protocol, configured by a network, or indicated by a network.

Optionally, the guard bandwidth is related to at least one of the following information, and the at least one of the information includes:
TDD information of the RU, TDD information of the MT, a transmission direction of the RU, or a transmission direction of the MT.

Optionally, at least one of the following is met:
a guard bandwidth between the MT uplink and the RU uplink is a first guard bandwidth;
a guard bandwidth between the MT downlink and the RU downlink is a second guard bandwidth, where the second guard bandwidth is the same as or different from the first guard bandwidth; and
a guard bandwidth between the MT flexible and the RU flexible is a third guard bandwidth, where the third guard bandwidth is maximum guard bandwidth of the first guard bandwidth and the second guard bandwidth.

For example, a guard bandwidth between MT UL and RU UL is GB 1, a guard bandwidth between MT DL and RU DL is GB 2, and a guard bandwidth between MT flexible and RU flexible is GB 3. The GB 1, GB 2, and GB 3 may be the same or different, and GB 3 = MAX (GB 1, GB 2).

In an embodiment, the method further includes:
The RU of the repeater determines a carrier for the RU based on fourth information, where the fourth information is side control information (side control information), or the fourth information is a predefined or configured association relationship between a carrier for the MT and a carrier for the RU. Optionally, the side control information is information transmitted by a network device to the repeater, and the repeater receives the side control information through the MT.

Specifically, the side control information of the MT may carry a carrier identifier of the RU, to associate a carrier on which the MT transmits the side control information with a carrier for the RU.

Alternatively, an association relationship between a carrier on which the MT transmits the side control information and a carrier for the RU is predefined in a protocol or configured by a network.

Therefore, the carrier for the RU may be determined based on the side control information or the association relationship between the carrier for the MT and the carrier for the RU.

Optionally, the MT and the RU may perform transmission on different carriers.

Optionally, switching between the MT and the RU supports at least one of the following cases:
switching between the MT uplink and the RU uplink;
switching between the MT uplink and the RU downlink;
switching between the MT downlink and the RU uplink; and
switching between the MT downlink and the RU downlink.

Optionally, timing in the MT uplink is aligned with timing in the RU uplink.

Specifically, the network-side device may configure or indicate timing alignment between MT UL and RU UL.

In this embodiment of this application, different multiplexing methods for the RU and the MT can be implemented, to achieve a balance between resource utilization and a delay, with high flexibility, so that requirements of different scenarios can be met.

FIG. 6 is a second schematic flowchart of a resource multiplexing method for a repeater according to an embodiment of this application. The repeater in this embodiment includes a radio unit RU and a mobile termination MT. As shown in FIG. 6, the method provided in this embodiment includes the following steps.

Step 201: A network-side device transmits first information to the repeater, where the first information includes information for determining a resource type and/or a transmission direction, and the first information is used by the repeater to determine a resource or a state of the RU.

Optionally, the method further includes:
The network-side device transmits third information to the repeater, where the third information is used to indicate time information of the state of the RU, and the third information includes at least one of the following: duration, a periodicity, an offset of a starting position, an offset of an ending position, a reference time point, and a subcarrier spacing.

Optionally, the first information and/or the third information are carried in at least one of the following:
F1 application protocol F1-AP signaling, a backhaul access protocol packet data unit BAP-PDU, radio resource control RRC, a medium access control control element MAC CE, or DCI.

Specific implementation processes and technical effects of the method in this embodiment are the same as those in the method embodiment on the terminal side. For details, refer to the detailed descriptions in the method embodiment on the terminal side. Details are not described herein again.

The resource multiplexing method for a repeater in the embodiments of the application may be performed by a resource multiplexing apparatus for a repeater. In the embodiments of this application, a resource multiplexing apparatus for a repeater in the embodiments of this application is described by using an example in which the resource multiplexing apparatus for a repeater performs the resource multiplexing method for a repeater.

FIG. 7 is a first schematic structural diagram of a resource multiplexing apparatus for a repeater according to an embodiment of this application. As shown in FIG. 7, the resource multiplexing apparatus for a repeater in this embodiment includes:
a processing module 210, configured to determine a resource or a state of the RU based on first information, where the first information includes information for determining a resource type and/or a transmission direction.

Optionally, the first information includes at least one of the following: resource availability information or time division duplex TDD information, the resource availability information is used to determine a resource type, and the TDD information is used to determine a transmission direction of the MT or the RU on a time unit.

Optionally, the first information includes the resource availability information, and the processing module 210 is specifically configured to:
determine the resource or the state of the RU based on a resource type determined based on the resource availability information, where the resource type includes at least one of the following: a hard-type resource, a soft-type resource, or an unavailable-type resource.

Optionally, the processing module 210 is specifically configured to:
in a case that a resource type determined based on resource availability information of a first resource is a hard-type resource, the first resource is a resource available to the RU, or the RU is in an on state or a non-forwarding state on the first resource; or
in a case that a resource type determined based on resource availability information of a first resource is a hard-type resource, determine the state of the RU based on the TDD information.

Optionally, the processing module 210 is specifically configured to:
if a transmission direction of the MT on the first resource is uplink, the state of the RU on the first resource is uplink forwarding or amplification-and-forwarding;
if a transmission direction of the MT on the first resource is downlink, the state of the RU on the first resource is downlink forwarding or amplification-and-forwarding; or
if a transmission direction of the MT on the first resource is flexible, the state of the RU on the first resource is uplink forwarding or amplification-and-forwarding, or the state of the RU on the first resource is downlink forwarding or amplification-and-forwarding.

Optionally, the processing module 210 is specifically configured to:
in a case that a resource type determined based on resource availability information of a first resource is a soft-type resource, the first resource is a resource unavailable to the RU, or the RU is in an off state on the first resource; or
in a case that a resource type determined based on resource availability information of a first resource is a soft-type resource, the state of the RU does not affect transmitting and/or receiving by the MT; or
in a case that a resource type determined based on resource availability information of a first resource is a soft-type resource, determine the resource or the state of the RU based on the TDD information; or
in a case that a resource type determined based on resource availability information of a first resource is a soft-type resource, determine the resource or the state of the RU based on downlink control information DCI.

Optionally, the processing module 210 is specifically configured to:
if a transmission direction of the MT on the first resource is downlink, the state of the RU on the first resource is downlink forwarding or amplification-and-forwarding; or
if a transmission direction of the MT on the first resource is downlink, the RU is in an off state on the first resource; or
if a transmission direction of the MT on the first resource is uplink, the RU is in an off state on the first resource; or
if a transmission direction of the MT on the first resource is uplink, the state of the RU on the first resource is uplink forwarding or amplification-and-forwarding.

Optionally, the first information includes the TDD information, and the processing module 210 is specifically configured to:
determine the resource or the state of the RU based on a transmission direction determined based on TDD information of a first resource.

Optionally, the processing module 210 is specifically configured to:
if a transmission direction on the first resource is uplink, the RU is in an uplink on state on the first resource, the RU is in a downlink off state on the first resource, and the RU is in a flexible on or off state on the first resource; or
if a transmission direction on the first resource is downlink, the RU is in an uplink off state on the first resource, the RU is in a downlink on state on the first resource, and the RU is in a flexible on or off state on the first resource; or
if a transmission direction on the first resource is flexible, the RU is in uplink, downlink, and flexible on states on the first resource; or
if a transmission direction on the first resource is flexible, the RU is in uplink, downlink, and flexible off states on the first resource; or
if a transmission direction on the first resource is flexible, determine uplink, downlink, and flexible states of the RU on the first resource based on second information, where the second information is used to determine a state of the RU; or
if a transmission direction on the first resource is flexible, the RU is in an off state on the first resource.

Optionally, the apparatus further includes:
a receiving module 220, configured to receive third information transmitted by a network-side device, where the third information is used to indicate time information of the state of the RU, and the third information includes at least one of the following:
duration, a periodicity, an offset of a starting position, an offset of an ending position, a reference time point, and a subcarrier spacing.

Optionally, the first information and/or the third information are carried in at least one of the following:
F1 application protocol F1-AP signaling, a backhaul access protocol packet data unit BAP-PDU, radio resource control RRC, a medium access control control element MAC CE, or DCI.

Optionally, in a case that a resource for the RU of the repeater conflicts with a resource for the MT of the repeater on a second resource, the processing module 210 is further configured to:
determine transmission by the RU and/or the MT based on at least one of the following:
the second resource is a transmission resource for the MT, or the RU is in an off state on the second resource; or
the second resource is a transmission resource for the RU, or the RU is in an on state on the second resource; or
determine the transmission by the RU and/or the MT based on an information type of the MT and/or the RU.

Optionally, if an information type of the MT is a first signal, the second resource is a transmission resource for the MT; or
if an information type of the RU is a first signal, the second resource is a transmission resource for the RU; or
if an information type of the MT is first configuration information, the second resource is a transmission resource for the MT, where the first configuration information includes at least one of the following: physical uplink control channel PUCCH configuration information, PRACH configuration information, RRC configuration information, or RRC reconfiguration information; or
if an information type of the MT is connection establishment information, the second resource is a transmission resource for the MT; or
if an information type of the MT is information for parameter adjustment, the second resource is a transmission resource for the RU, where
the first signal includes at least one of the following: a sounding reference signal SRS, a physical random access channel PRACH, a channel state information reference signal CSI-RS, a type 0 common search space CSS, a synchronization signal block SSB, a PUCCH, or RRC information.

Optionally, a guard bandwidth between transmission resources for the MT and the RU is predefined, configured, or indicated.

Optionally, the guard bandwidth is related to at least one of the following information, and the at least one of the information includes:
TDD information of the RU, TDD information of the MT, a transmission direction of the RU, or a transmission direction of the MT.

Optionally, at least one of the following is met:
a guard bandwidth between the MT uplink and the RU uplink is a first guard bandwidth;
a guard bandwidth between the MT downlink and the RU downlink is a second guard bandwidth, where the second guard bandwidth is the same as or different from the first guard bandwidth; and
a guard bandwidth between the MT flexible and the RU flexible is a third guard bandwidth, where the third guard bandwidth is maximum guard bandwidth of the first guard bandwidth and the second guard bandwidth.

Optionally, the processor 210 is further configured to:
determine a carrier for the RU based on fourth information, where the fourth information is side control information, or the fourth information is a predefined or configured association relationship between a carrier for the MT and a carrier for the RU.

Optionally, switching between the MT and the RU supports at least one of the following cases:
switching between the MT uplink and the RU uplink;
switching between the MT uplink and the RU downlink;
switching between the MT downlink and the RU uplink; and
switching between the MT downlink and the RU downlink.

Optionally, timing in the MT uplink is aligned with timing in the RU uplink.

The apparatus in this embodiment may be configured to perform the method in any one of the method embodiments on the terminal side. Specific implementation processes and technical effects of the apparatus are the same as those in the method embodiment on the terminal side. For details, refer to the detailed descriptions in the method embodiment on the terminal side. Details are not described herein again.

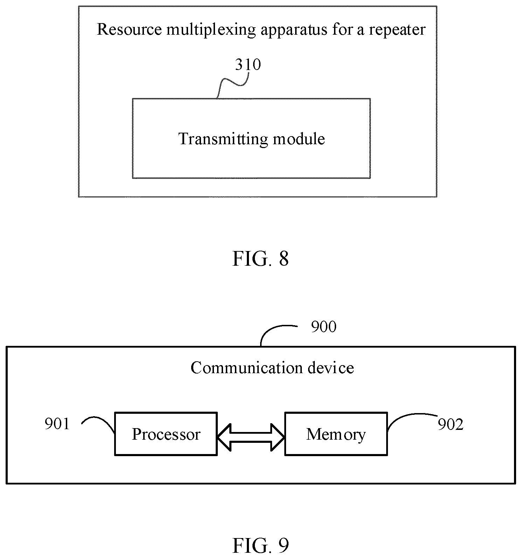

FIG. 8 is a second schematic structural diagram of a resource multiplexing apparatus for a repeater according to an embodiment of this application. The repeater includes a radio unit RU and a mobile termination MT. As shown in FIG. 8, the resource multiplexing apparatus for a repeater in this embodiment includes:
a transmitting module 310, configured to transmit first information to the repeater, where the first information includes information for determining a resource type and/or a transmission direction, and the first information is used by the repeater to determine a resource or a state of the RU.

Optionally, the transmitting module 310 is further configured to:
transmit third information to the repeater, where the third information is used to indicate time information of the state of the RU, and the third information includes at least one of the following:

duration, a periodicity, an offset of a starting position, an offset of an ending position, a reference time point, and a subcarrier spacing.

Optionally, the first information and/or the third information are carried in at least one of the following:
F1 application protocol F1-AP signaling, a backhaul access protocol packet data unit BAP-PDU, radio resource control RRC, a medium access control control element MAC CE, or DCI.

The apparatus in this embodiment may be configured to perform the method in any one of the method embodiments for the network-side device. Specific implementation processes and technical effects of the apparatus are the same as those in the method embodiment for the network-side device. For details, refer to the detailed descriptions in the method embodiment for the network-side device. Details are not described herein again.

The resource multiplexing apparatus for a repeater in this embodiment of this application may be an electronic device, for example, an electronic device with an operating system; or may be a component in an electronic device, for example, an integrated circuit or a chip. The electronic device may be a terminal or another device other than the terminal. For example, the terminal may include but is not limited to the aforementioned types of the terminal 11, and the another device may be a server, a network attached storage (Network Attached Storage, NAS), or the like. This is not specifically limited in embodiments of this application.

The resource multiplexing apparatus for a repeater in this embodiment of this application is capable of implementing the processes implemented in the method embodiments of FIG. 3 to FIG. 5, with the same technical effects achieved. To avoid repetition, details are not described herein again.

Optionally, as shown in FIG. 9, an embodiment of this application further provides a communication device 900, including a processor 901 and a memory 902. The memory 902 stores a program or instructions capable of running on the processor 901. For example, in a case that the communication device 900 is a repeater, when the program or instructions are executed by the processor 901, the steps in the foregoing embodiments of the resource multiplexing method for a repeater are implemented, with the same technical effects achieved. In a case that the communication device 900 is a network-side device, when the program or instructions are executed by the processor 901, the steps in the foregoing embodiments of the resource multiplexing method for a repeater are implemented, with the same technical effects achieved. To avoid repetition, details are not described herein again.

An embodiment of this application further provides a repeater, including a processor and a communication interface. The processor is configured to determine a resource or a state of an RU based on first information, where the first information includes information for determining a resource type and/or a transmission direction. The repeater embodiment corresponds to the foregoing repeater-side method embodiment, and all implementation processes and implementations of the foregoing method embodiment are applicable to the repeater embodiment, with the same technical effects achieved.

An embodiment of this application further provides a network-side device, including a processor and a communication interface. The communication interface is configured to transmit first information to a repeater, where the first information includes information for determining a resource type and/or a transmission direction, and the first information is used by the repeater to determine a resource or a state of an RU. The network-side device embodiment corresponds to the foregoing method embodiment for the network-side device, and all implementation processes and implementations of the foregoing method embodiment are applicable to the network-side device embodiment, with the same technical effects achieved.

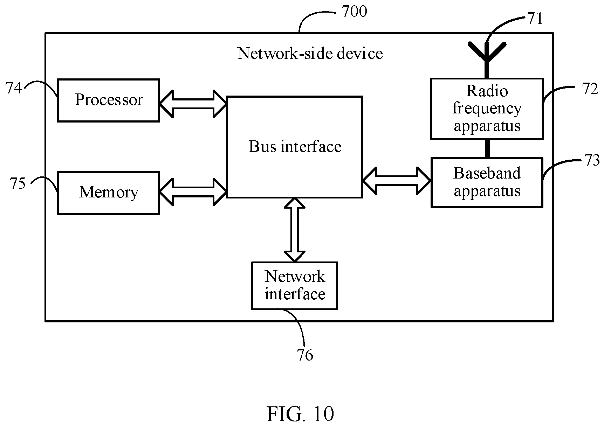

Specifically, an embodiment of this application further provides a network-side device. As shown in FIG. 10, the network-side device 700 includes an antenna 71, a radio frequency apparatus 72, a baseband apparatus 73, a processor 74, and a memory 75. The antenna 71 is connected to the radio frequency apparatus 72. In an uplink direction, the radio frequency apparatus 72 receives information through the antenna 71, and transmits the received information to the baseband apparatus 73 for processing. In a downlink direction, the baseband apparatus 73 processes to-be-transmitted information, and transmits the information to the radio frequency apparatus 72; and the radio frequency apparatus 72 processes the received information and then transmits the information through the antenna 71.

The frequency band processing apparatus may be located in the baseband apparatus 73. The method performed by the network-side device in the foregoing embodiments may be implemented in the baseband apparatus 73, and the baseband apparatus 73 includes a baseband processor 75 and a memory 75.

The baseband apparatus 73 may include, for example, at least one baseband board, where a plurality of chips are disposed on the baseband board. As shown in FIG. 10, one of the chips is, for example, the baseband processor 75, which is connected to the memory 75 through a bus interface, to invoke a program in the memory 75 to perform the operations of the network device shown in the foregoing method embodiments.

The baseband apparatus 73 and the network-side device may further include a network interface 76, configured to exchange information with the radio frequency apparatus 72. The interface is, for example, a common public radio interface (common public radio interface, CPRI for short).

Specifically, the network-side device 700 in this embodiment of the present invention further includes instructions or a program stored in the memory 75 and capable of running on the processor 75, and the processor 75 invokes the instructions or program in the memory 75 to perform the method performed by the modules shown in FIG. 8, with the same technical effects achieved. To avoid repetition, details are not described herein again.

An embodiment of this application further provides a readable storage medium. The readable storage medium stores a program or instructions. When the program or instructions are executed by a processor, the processes in the foregoing embodiments of the resource multiplexing method for a repeater are implemented, with the same technical effects achieved. To avoid repetition, details are not described herein again.

The processor is a processor in the terminal in the foregoing embodiments. The readable storage medium includes a computer-readable storage medium, for example, a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions, to implement the processes in the foregoing embodiments of the resource multiplexing method for a repeater, with the same technical effects achieved. To avoid repetition, details are not described herein again.

It should be understood that the chip provided in this embodiment of this application may also be referred to as a system-level chip, a system on chip, a chip system, a system-on-a-chip, or the like.

An embodiment of this application further provides a computer program or program product. The computer program or program product is stored in a storage medium. The computer program or program product is executed by at least one processor to implement the processes in the foregoing embodiments of the resource multiplexing method for a repeater, with the same technical effects achieved. To avoid repetition, details are not described herein again.

An embodiment of this application further provides a communication system, including a repeater and a network-side device. The repeater may be configured to perform the steps of the foregoing resource multiplexing method for a repeater. The network-side device may be configured to perform the steps of the foregoing resource multiplexing method for a repeater.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a... " does not preclude the existence of other identical elements in the process, method, article, or apparatus that includes the element. In addition, it should be noted that the scope of the method and apparatus in the implementations of this application is not limited to performing functions in the shown or described order, but may also include performing functions in a substantially simultaneous manner or in a reverse order depending on the functions involved. For example, the described method may be performed in an order different from that described, and steps may be added, omitted, or combined. In addition, features described with reference to some examples may be combined in other examples.

According to the foregoing descriptions of the implementations, a person skilled in the art can clearly understand that the methods in the foregoing embodiments may be implemented by using software in combination with a necessary common hardware platform, or certainly may be implemented by using hardware. However, in most cases, the former is a preferred implementation. Based on such an understanding, the technical solutions of this application essentially or the part contributing to the conventional technology may be implemented in a form of a computer software product. The computer software product may be stored in a storage medium (for example, a ROM/RAM, a magnetic disk, or a compact disc), and includes several instructions for instructing a terminal (which may be a mobile phone, a computer, a server, an air conditioner, a network device, or the like) to perform the methods in the embodiments of this application.

The foregoing describes the embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection scope of this application.

## Claims

1. A resource multiplexing method for a repeater, wherein the repeater comprises a radio unit RU and a mobile termination MT, and the method comprises:
determining, by the repeater, a resource or a state of the RU based on first information, wherein the first information comprises information for determining a resource type and/or a transmission direction.

2. The resource multiplexing method for a repeater according to claim 1, wherein the first information comprises at least one of the following: resource availability information or time division duplex TDD information, the resource availability information is used to determine a resource type, and the TDD information is used to determine a transmission direction of the MT or the RU on a time unit.

3. The resource multiplexing method for a repeater according to claim 2, wherein the first information comprises the resource availability information, and the determining, by the repeater, a resource or a state of the RU based on first information comprises:
determining, by the repeater, the resource or the state of the RU based on a resource type determined based on the resource availability information, wherein the resource type comprises at least one of the following: a hard-type resource, a soft-type resource, or an unavailable-type resource.

4. The resource multiplexing method for a repeater according to claim 3, wherein the determining, by the repeater, the resource or the state of the RU based on a resource type determined based on the resource availability information comprises:
in a case that a resource type determined based on resource availability information of a first resource is a hard-type resource, the first resource is a resource available to the RU, or the RU is in an on state or a non-forwarding state on the first resource; or
in a case that a resource type determined based on resource availability information of a first resource is a hard-type resource, determining, by the repeater, the state of the RU based on the TDD information.

5. The resource multiplexing method for a repeater according to claim 4, wherein the determining, by the repeater, the state of the RU based on the TDD information comprises:
if a transmission direction of the MT on the first resource is uplink, the state of the RU on the first resource is uplink forwarding or amplification-and-forwarding;
if a transmission direction of the MT on the first resource is downlink, the state of the RU on the first resource is downlink forwarding or amplification-and-forwarding; or
if a transmission direction of the MT on the first resource is flexible, the state of the RU on the first resource is uplink forwarding or amplification-and-forwarding, or the state of the RU on the first resource is downlink forwarding or amplification-and-forwarding.

6. The resource multiplexing method for a repeater according to claim 3, wherein the determining, by the repeater, the resource or the state of the RU based on a resource type determined based on the resource availability information comprises:
in a case that a resource type determined based on resource availability information of a first resource is a soft-type resource, the first resource is a resource unavailable to the RU, or the RU is in an off state on the first resource; or
in a case that a resource type determined based on resource availability information of a first resource is a soft-type resource, the state of the RU does not affect transmitting and/or receiving by the MT; or
in a case that a resource type determined based on resource availability information of a first resource is a soft-type resource, determining, by the repeater, the resource or the state of the RU based on the TDD information; or
in a case that a resource type determined based on resource availability information of a first resource is a soft-type resource, determining, by the repeater, the resource or the state of the RU based on downlink control information DCI.

7. The resource multiplexing method for a repeater according to claim 6, wherein the determining, by the repeater, the resource or the state of the RU based on the TDD information comprises:
if a transmission direction of the MT on the first resource is downlink, the state of the RU on the first resource is downlink forwarding or amplification-and-forwarding; or
if a transmission direction of the MT on the first resource is downlink, the RU is in an off state on the first resource; or
if a transmission direction of the MT on the first resource is uplink, the RU is in an off state on the first resource; or
if a transmission direction of the MT on the first resource is uplink, the state of the RU on the first resource is uplink forwarding or amplification-and-forwarding.

8. The resource multiplexing method for a repeater according to claim 2, wherein the first information comprises the TDD information, and the determining, by the repeater, a resource or a state of the RU based on first information comprises:
determining, by the repeater, the resource or the state of the RU based on a transmission direction determined based on TDD information of a first resource.

9. The resource multiplexing method for a repeater according to claim 8, wherein the determining, by the repeater, the resource or the state of the RU based on a transmission direction determined based on TDD information of a first resource comprises:
if a transmission direction on the first resource is uplink, the RU is in an uplink on state on the first resource, the RU is in a downlink off state on the first resource, and the RU is in a flexible on or off state on the first resource; or
if a transmission direction on the first resource is downlink, the RU is in an uplink off state on the first resource, the RU is in a downlink on state on the first resource, and the RU is in a flexible on or off state on the first resource; or
if a transmission direction on the first resource is flexible, the RU is in uplink, downlink, and flexible on states on the first resource; or
if a transmission direction on the first resource is flexible, the RU is in uplink, downlink, and flexible off states on the first resource; or
if a transmission direction on the first resource is flexible, determining, by the repeater, uplink, downlink, and flexible states of the RU on the first resource based on second information, wherein the second information is used to determine a state of the RU; or
if a transmission direction on the first resource is flexible, the RU is in an off state on the first resource.

10. The resource multiplexing method for a repeater according to any one of claims 1 to 9, wherein the method further comprises:
receiving, by the repeater, third information transmitted by a network-side device, wherein the third information is used to indicate time information of the state of the RU, and the third information comprises at least one of the following:
duration, a periodicity, an offset of a starting position, an offset of an ending position, a reference time point, and a subcarrier spacing.

11. The resource multiplexing method for a repeater according to claim 1 or 10, wherein
the first information and/or the third information are carried in at least one of the following:
F1 application protocol F1-AP signaling, a backhaul access protocol packet data unit BAP-PDU, radio resource control RRC, a medium access control control element MAC CE, or DCI.

12. The resource multiplexing method for a repeater according to claim 1, wherein in a case that a resource for the RU of the repeater conflicts with a resource for the MT of the repeater on a second resource, transmission by the RU and/or the MT of the repeater is determined based on at least one of the following:
the second resource is a transmission resource for the MT, or the RU is in an off state on the second resource; or
the second resource is a transmission resource for the RU, or the RU is in an on state on the second resource; or
determining the transmission by the RU and/or the MT based on an information type of the MT and/or the RU.

13. The resource multiplexing method for a repeater according to claim 12, wherein the determining the transmission by the RU and/or the MT based on an information type of the MT and the RU comprises:
if an information type of the MT is a first signal, the second resource is a transmission resource for the MT; or
if an information type of the RU is a first signal, the second resource is a transmission resource for the RU; or
if an information type of the MT is first configuration information, the second resource is a transmission resource for the MT, wherein the first configuration information comprises at least one of the following: physical uplink control channel PUCCH configuration information, PRACH configuration information, RRC configuration information, or RRC reconfiguration information; or
if an information type of the MT is connection establishment information, the second resource is a transmission resource for the MT; or
if an information type of the MT is information for parameter adjustment, the second resource is a transmission resource for the RU, wherein
the first signal comprises at least one of the following: a sounding reference signal SRS, a physical random access channel PRACH, a channel state information reference signal CSI-RS, a type 0 common search space CSS, a synchronization signal block SSB, a PUCCH, or RRC information.

14. The resource multiplexing method for a repeater according to any one of claims 1 to 13, wherein
a guard bandwidth between a transmission resource for the MT and a transmission resource for the RU is predefined, configured, or indicated.

15. The resource multiplexing method for a repeater according to claim 14, wherein the guard bandwidth is related to at least one of the following information, and the at least one of the information comprises:
TDD information of the RU, TDD information of the MT, a transmission direction of the RU, or a transmission direction of the MT.

16. The resource multiplexing method for a repeater according to claim 14, wherein at least one of the following is met:
a guard bandwidth between the MT uplink and the RU uplink is a first guard bandwidth;
a guard bandwidth between the MT downlink and the RU downlink is a second guard bandwidth, wherein the second guard bandwidth is the same as or different from the first guard bandwidth; and
a guard bandwidth between the MT flexible and the RU flexible is a third guard bandwidth, wherein the third guard bandwidth is maximum guard bandwidth of the first guard bandwidth and the second guard bandwidth.

17. The resource multiplexing method for a repeater according to any one of claims 1 to 13, wherein the method further comprises:
determining, by the RU of the repeater, a carrier for the RU based on fourth information, wherein the fourth information is side control information, or the fourth information is a predefined or configured association relationship between a carrier for the MT and a carrier for the RU.

18. The resource multiplexing method for a repeater according to any one of claims 1 to 13, wherein
switching between the MT and the RU supports at least one of the following cases:
switching between the MT uplink and the RU uplink;
switching between the MT uplink and the RU downlink;
switching between the MT downlink and the RU uplink; and
switching between the MT downlink and the RU downlink.

19. The resource multiplexing method for a repeater according to any one of claims 1 to 13, wherein
timing in the MT uplink is aligned with timing in the RU uplink.

20. A resource multiplexing method for a repeater, wherein the repeater comprises a radio unit RU and a mobile termination MT, and the method comprises:
transmitting, by a network-side device, first information to the repeater, wherein the first information comprises information for determining a resource type and/or a transmission direction, and the first information is used by the repeater to determine a resource or a state of the RU.

21. The resource multiplexing method for a repeater according to claim 20, wherein the method further comprises:
transmitting, by the network-side device, third information to the repeater, wherein the third information is used to indicate time information of the state of the RU, and the third information comprises at least one of the following:
duration, a periodicity, an offset of a starting position, an offset of an ending position, a reference time point, and a subcarrier spacing.

22. The resource multiplexing method for a repeater according to claim 20 or 21, wherein
the first information and/or the third information are carried in at least one of the following:
F1 application protocol F1-AP signaling, a backhaul access protocol packet data unit BAP-PDU, radio resource control RRC, a medium access control control element MAC CE, or DCI.

23. A resource multiplexing apparatus for a repeater, applied to a repeater, wherein the repeater comprises a radio unit RU and a mobile termination MT, and the apparatus comprises:
a processing module, configured to determine a resource or a state of the RU based on first information, wherein the first information comprises information for determining a resource type and/or a transmission direction.

24. A resource multiplexing apparatus for a repeater, applied to a repeater, wherein the repeater comprises a radio unit RU and a mobile termination MT, and the apparatus comprises:
a transmitting module, configured to transmit, for a network-side device, first information to the repeater, wherein the first information comprises information for determining a resource type and/or a transmission direction, and the first information is used by the repeater to determine a resource or a state of the RU.

25. A repeater, comprising a processor and a memory, wherein the memory stores a program or instructions capable of running on the processor, and when the program or instructions are executed by the processor, the steps of the resource multiplexing method for a repeater according to any one of claims 1 to 19 are implemented.

26. A network-side device, comprising a processor and a memory, wherein the memory stores a program or instructions capable of running on the processor, and when the program or instructions are executed by the processor, the steps of the resource multiplexing method for a repeater according to any one of claims 20 to 22 are implemented.
